# EUROPEAN PATENT SPECIFICATION

(11) **EP 1 046 542 B1**
(45) Date of publication and mention of the grant of the patent: **05.01.2005**
(21) Application number: 00303386.7
(22) Date of filing: 20.04.2000
(51) Int. Cl.: B60N 3/02

(54) **Handle assembly with integrated hook**
Haltegriff mit integriertem Haken
Poignée avec crochet intégré

(30) Priority: 22.04.1999 US 130724 P
(43) Date of publication of application: 25.10.2000
(73) Proprietor: Lear Corporation, Southfield, MI 48034 (US)
(72) Inventor: Gosselet, Philip, 25170 Chaucenne (FR)
(74) Representative: Archer, Philip Bruce

(56) References cited:
- DE-A- 3 513 293
- DE-A- 3 616 441
- DE-A- 3 828 701
- DE-A- 19 611 309
- FR-A- 2 451 840

## Description

### TECHNICAL FIELD

The Invention relates to a handle assembly with an integrated support hook, such as a coat-hook, for use with a motor vehicle.

### BACKGROUND ART

Grab handles and coat-hooks are frequently provided in the interior of motor vehicles. Such handles and coat-hooks are, however, provided as separate components. Consequently, the cost to manufacture and installing such components is significant. Improvements can also be made generally to such components.

German patent application number DE-A-3 616 441 describes a typical pivotable grab handle assembly for a vehicle according to the preamble of claim 1. French patent application number FR-A-2 451 840 describes a fixed handle with a pivotally mounted hook.

### DISCLOSURE OF INVENTION

According to the present invention there is provided a handle assembly as defined in the accompanying claims.

In an embodiment of the present invention there is provided a handle assembly for use with a motor vehicle. The handle assembly includes a handle adapted to be connected to the vehicles, and a support hook pivotally connected to the handle. The support hook is pivotable between a stowed position and a use position for supporting articles in vehicle.

The handle assembly may further comprise a spring connected between the handle and the support hook for urging the support hook toward the use position. In addition, the handle assembly may include a latch mechanism that is moveably associated with the handle, and engageable with a slot in the support hook to secure the support hook in the stowed position.

The handle assembly is provided with a mounting bracket that is adapted to be connected to the vehicle. Furthermore, the handle and the support hook are each pivotally connected to the mounting bracket. Another spring may be connected between the handle and the mounting bracket for urging the handle upwardly toward a rest position.

Preferably, a dampening mechanism is connected between the support hook and the mounting bracket for dampening pivotal movement of the support hook. Advantageously, the dampening mechanism may also dampen pivotal movement of the handle when the support hook is in the stowed position.

While the dampening mechanism may comprise any suitable element or elements, the dampening mechanism preferably includes an inner cylinder connected to the mounting bracket, and an outer cylinder connected to the support hook that frictionally and rotatably engages the inner cylinder.

These and other objects, features and advantages of the invention are readily apparent from the following detailed description of the best modes for carrying out the invention when taken in conjunction with the accompanying drawings.

### BRIEF DESCRIPTION OF DRAWINGS

FIGURE 1 is a perspective view of a handle assembly according to the invention including a handle and an integrated support hook such as a coat-hook, wherein the coat-hook is shown in a stowed position;
FIGURE 2 is a perspective view of the handle assembly showing the coat-hook in a use position;
FIGURE 3 is a fragmentary front view of the handle assembly partially in section;
FIGURE 4 is an exploded perspective view of the handle assembly;
FIGURE 5 is an exploded perspective view of the coat-hook and a dampening mechanism; and
FIGURE 6 is a cross-sectional view of the handle assembly.

### BEST MODE FOR CARRYING OUT THE INVENTION

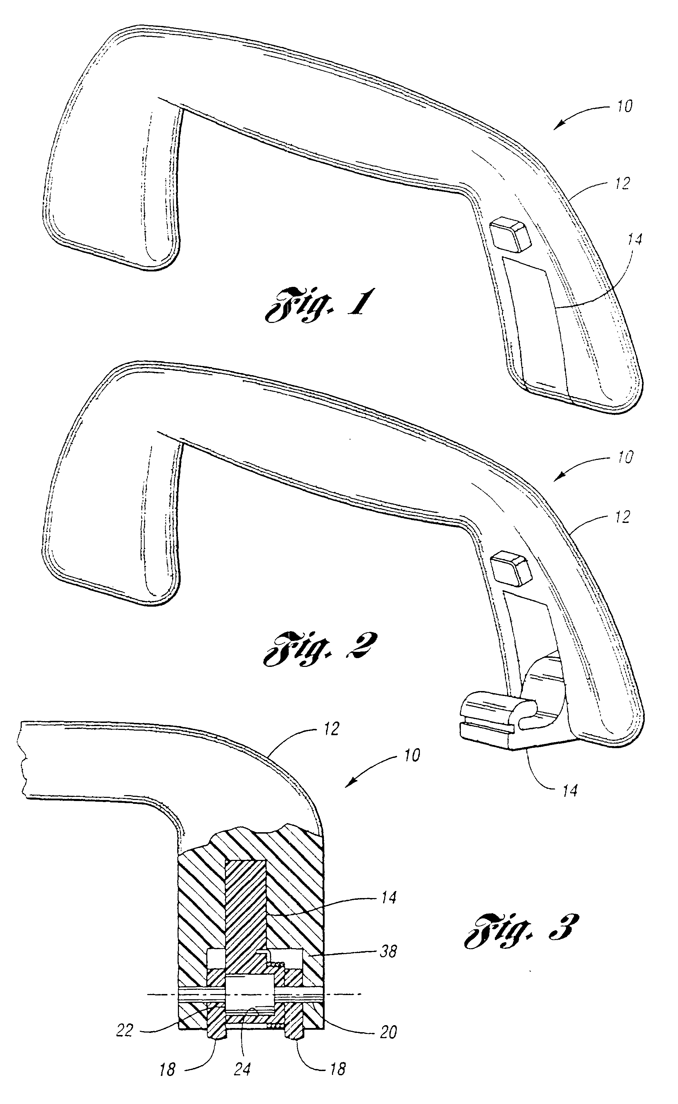

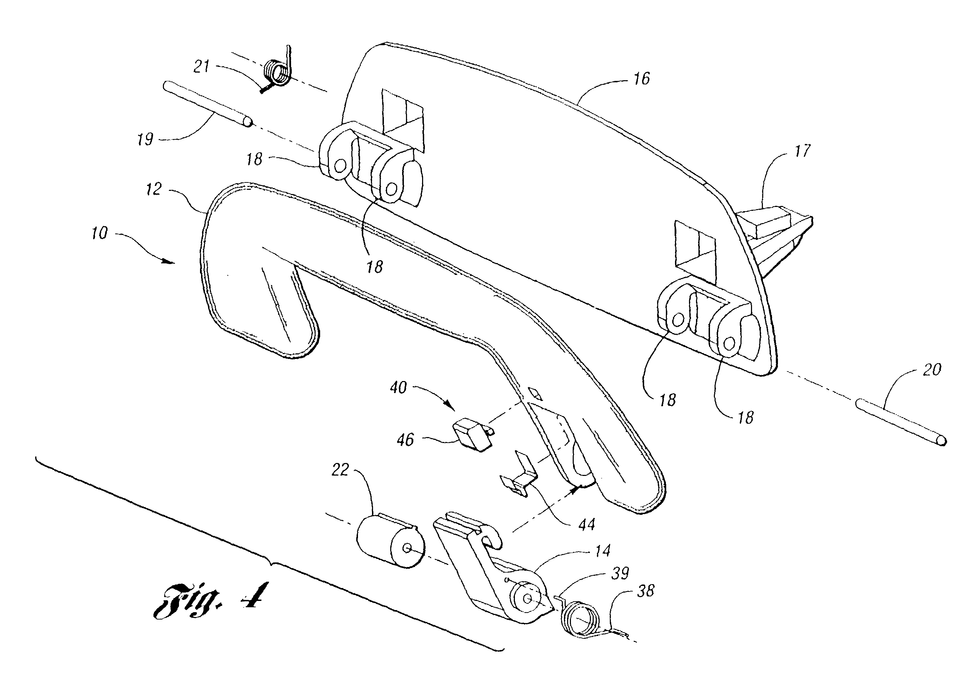

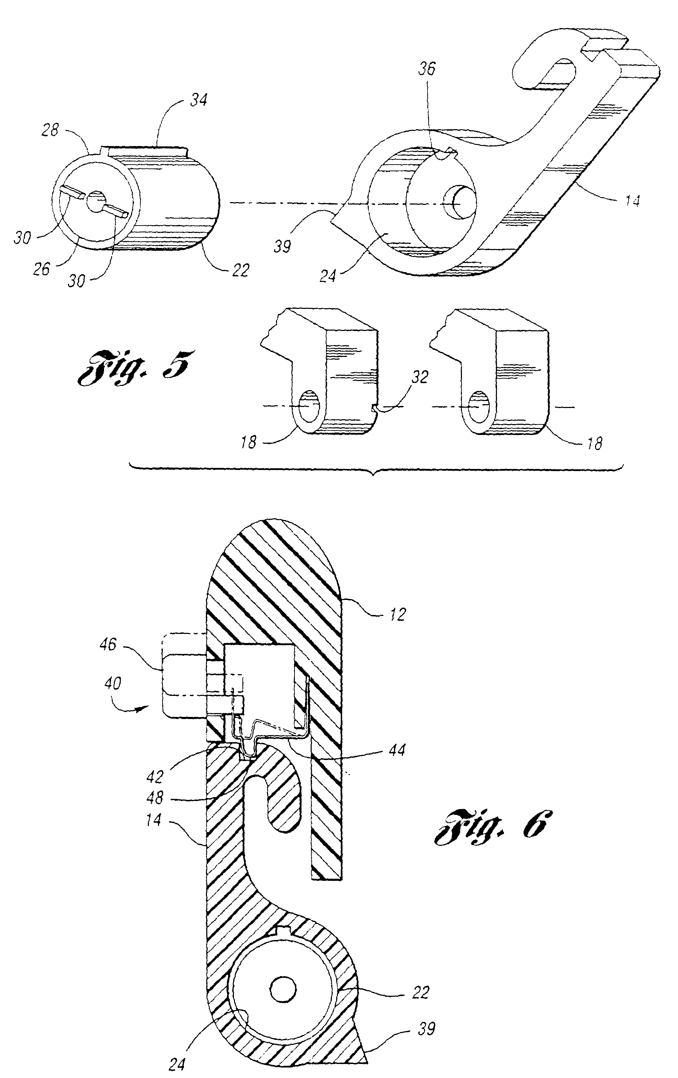

Figures 1 through 4 show a handle assembly 10 according to the invention for use with a motor vehicle. The handle assembly 10 includes a handle 12 and a support hook, such as a coat-hook 14, pivotally connected to a leg of the handle 12, wherein the coat-hook 14 is pivotable between a stowed position shown in Figure 1, and a use position shown in Figure 2. The handle 12 is pivotally connected to a mounting bracket 16, which is adapted to be mounted to the vehicle in any suitable manner, such as with Z-clips 17 shown in Figure 4, or with removable fasteners such as bolts or screws (not shown). The mounting bracket 16 has a plurality of hinges 18 for receiving the handle 12, and the handle 12 is preferably connected to the hinges 18 with first and second pivot pins 19 and 20, respectively. The second pivot pin 20 also pivotally connects the coat-hook 14 to the handle 12 and the mounting bracket 16. A first torsional spring 21 is connected between the handle 12 and the mounting bracket 16 for urging the handle 12 upwardly toward a substantially vertical rest position.

As shown in Figures 3 through 6, the handle assembly 10 preferably includes a dampening mechanism or damper 22, which is disposed in a bore 24 of the coat-hook 14 and serves to dampen pivotal movement of the coat-hook 14 so as to enable smooth, controlled movement of the coat-hook 14. The damper 22 includes an inner silicone cylinder 26 and an outer cylinder 28 that frictionally and rotatably engages the inner cylinder 26. The inner cylinder 26 has a pair of first ribs 30 disposed on one end, and the ribs 30 engage a first slot 32 in one of the hinges 18. The outer cylinder 28 has a second rib 34 that engages a second slot 36 of the bore 24 such that the outer cylinder 28 moves with the coat-hook 14. Alternatively, the damper 22 may include any suitable element or elements connected between the mounting bracket 16 and the coat-hook 14.

Advantageously, the damper 22 also dampens pivotal movement of the handle 12 when the coat-hook 14 is in the stowed position. This occurs because the coat-hook 14 pivots with the handle 12 when the coat-hook 14 is in the stowed position. Thus, only one dampening mechanism is needed to dampen pivotal movement of both the coat-hook 14 and the handle 12. When the coat-hook 14 is in the use position, however, the coat-hook 14 does not pivot with the handle 12. Consequently, the damper 22 does not dampen pivotal movement of the handle 12 when the coat-hook 14 is in the use position. Alternatively, the handle assembly 10 may be provided without a dampening mechanism.

The handle assembly 10 further includes a second torsional spring 38 connected between the coat-hook 14 and the handle 12 for urging the coat-hook 14 toward the use position. A projection 39 on the coat-hook 14 is engageable with the mounting bracket 16 to limit movement of the coat-hook 14. Advantageously, because the first torsional spring 21 is connected between the handle 12 and the mounting bracket 16, and the second torsional spring 38 is connected between the handle 12 and the coat-hook 14, there is no interaction between opposite forces developed by the torsional springs 21 and 38.

A latch mechanism 40 is engageable with a third slot 42 in the coat-hook 14 to secure the coat-hook 14 in the stowed position shown in Figure 6. The latch mechanism 40 includes a latch spring 44, which is preferably a stamped metal spring, and a latch button 46 slidably engaged with the handle 12. The latch spring 44 has one end connected to the handle 12, and an opposite end connected to the latch button 46. The latch spring 44 further has a detent 48 that is engageable with the third slot 42 of the coat-hook 14 The latch mechanism 40 is movable between a latched position, shown in solid lines in Figure 6, and an unlatched position shown in phantom.

To assemble the handle assembly 10, the latch spring 44 and latch button 46 are connected to the handle 12. Next, the damper 22 is inserted into the bore 24 of the coat-hook 14, and the second torsional spring 38 is mounted on the coat-hook 14. The handle 12 is then aligned with the hinges 18, and the coat-hook 14 is inserted into the handle 12. Next, the first torsional spring 21 is positioned between the handle 12 and the mounting bracket 16, and the pivot pins 19 and 20 are inserted through corresponding holes in the handle 12 and the hinges 18.

When the handle assembly 10 is not in use, the handle 12 is held in the rest position by the first torsional spring 21, and the coat-hook 14 is secured in the stowed position, shown in Figures 1 and 6, by the latch mechanism 40. When the latch button 46 is moved upwardly, the latch spring 44 is released from the coat-hook 14, and the coat-hook 14 is urged to the use position by the second torsional spring 38. As previously mentioned, the movement of the coat-hook 14 is dampened by the damper 22 and is limited by the projection 39. Advantageously, the handle 12 does not support any loads carried by the coat-hook 14 when the coat-hook 14 is in the use position. The coat-hook 14 may then be returned to the stowed position by forcing the coat-hook 14 against the bias of the second torsional spring 38 until the latch mechanism 40 snaps into the latched position shown in Figure 6.

While embodiments of the invention have been illustrated and described, it is not intended that these embodiments illustrate and describe all possible forms of the invention. Rather, the words used in the specification are words of description rather than limitation, and it is understood that various changes may be made without departing from the scope of the invention. For example, the latch mechanism may be provided with a latch button that is moveable inwardly with respect to the handle, instead of a latch button that slides along an exterior surface of the the handle.

## Claims

1. A handle assembly (10) for use with a motor vehicle, the handle assembly (10) comprising:
a mounting bracket (16) adapted to be mounted to the vehicle; and
a handle (12) pivotally connected to the mounting bracket (16) by a pivot pin (20);
**characterised in that** the assembly further comprises:
a support hook (14) also pivotally connected to the handle (12) and mounting bracket by the pivot pin (20), and wherein the support hook (14) is pivotable with respect to the handle (12) between a stowed position and a use position for supporting articles in the vehicle.

2. A handle assembly (10) of claim 1 wherein the handle includes a leg and the support hook is disposed within the leg.

3. A handle assembly (10) of claim 1 or 2 further comprising a further pivot pin (19) to further pivotally connect the handle to the mounting assembly.

4. A handle assembly (10) of claim 3 wherein the mounting bracket comprises a plurality of hinges (18) for receiving the handle (12) with the handle (12) pivotally connected to the hinges (18) by the pivot pins (19, 20).

5. A handle assembly (10) of any preceding claim wherein the support hook (14) includes a projection (39) that is engageable with the mounting bracket (16) to limit movement of the support hook (14).

6. The handle assembly (10) of any preceding claim further comprising a spring (38) connected between the handle (12) and the support hook (14) for urging the support hook (14) toward the use position.

7. The handle assembly (10) of any preceding claim further comprising a latch mechanism (40) that is moveably associated with the handle (12), and engageable with a slot (42) in the support hook (14) to secure the support hook (14) in the stowed position.

8. The handle assembly (10) of any preceding claim further comprising a dampening mechanism (22) connected between the mounting bracket (16) and the support hook (14) for dampening pivotal movement of the support hook (14).

9. The handle assembly (10) of claim 8 wherein the dampening mechanism (22) includes an inner cylinder (26) connected to the mounting bracket (16), and an outer cylinder (28) that frictionally and rotatably engages the inner cylinder (26), the outer cylinder (28) being connected to the support hook (14).

10. The handle assembly (10) of claim 9 wherein one of the cylinders (26,28) comprises silicone.

11. The handle assembly (10) of claim 9 or claim 10 wherein the inner cylinder (26) has a first rib (30) that engages a first slot (32) of the mounting bracket (16), and the outer cylinder (28) has a second rib (34) that engages a second slot (36) of the support hook (14).

12. The handle assembly (10) of any one of claims 8 to 11, wherein the dampening mechanism (22) also dampens pivotal movement of the handle (12) with respect to the mounting bracket (16) when the support hook (14) is in the stowed position.

13. The handle assembly (10) of any preceding claim further comprising a spring (21) connected between the handle (12) and the mounting bracket (16) for urging the handle (12) upwardly toward to rest position.

## Patentansprüche

1. Griffbaugruppe (10) zur Verwendung bei einem Kraftfahrzeug, die Griffbaugruppe (10) umfasst
eine Halterung (16), die an dem Fahrzeug angebracht werden kann; und
einen Griff (12), der durch einen Drehstift (20) mit der Halterung (16) schwenkbar verbunden ist;
**dadurch gekennzeichnet, dass** die Baugruppe ferner umfasst:
einen Traghaken (14), der durch den Drehstift (20) ebenfalls mit dem Griff (12) und mit der Halterung schwenkbar verbunden ist, und wobei der Traghaken (14) in Bezug auf den Griff (12) zwischen einer eingeklappten Stellung und einer Gebrauchsstellung zum Tragen von Sachen in dem Fahrzeug schwenkbar ist.

2. Griffbaugruppe (10) nach Anspruch 1, wobei der Griff einen Schenkel enthält und der Traghaken innerhalb des Schenkels angeordnet ist.

3. Griffbaugruppe (10) nach Anspruch 1 oder 2, die ferner einen weiteren Drehstift (19) umfasst, um den Griff ferner mit der Halterungsbaugruppe schwenkbar zu verbinden.

4. Griffbaugruppe (10) nach Anspruch 3, wobei die Halterung mehrere Scharniere (18) zum Aufnehmen des Griffs (12) umfasst, wobei der Griff (12) durch die Drehstifte (19, 20) schwenkbar mit den Scharnieren (18) verbunden ist.

5. Griffbaugruppe (10) nach einem vorhergehenden Anspruch, wobei der Traghaken (14) einen Vorsprung (39) enthält, der mit der Halterung (16) in Eingriff gelangen kann, um die Bewegung des Traghakens (14) zu begrenzen.

6. Griffbaugruppe (10) nach einem vorhergehenden Anspruch, die ferner eine Feder (38) umfasst, die zwischen dem Griff (12) und dem Traghaken (14) angebracht ist, um den Traghaken (14) zur Gebrauchsstellung zu drängen.

7. Griffbaugruppe (10) nach einem vorhergehenden Anspruch, die ferner eine Schlossfalle (40) umfasst, die beweglich mit dem Griff (12) verbunden ist und mit einem Schlitz (42) in dem Traghaken (14) in Eingriff gelangen kann, um den Traghaken (14) in der eingeklappten Stellung zu sichern.

8. Griffbaugruppe (10) nach einem vorhergehenden Anspruch, die ferner einen Dämpfungsmechanismus (22) umfasst, der zwischen der Halterung (16) und dem Traghaken (14) angebracht ist, um die Schwenkbewegung des Traghakens (14) zu dämpfen.

9. Griffbaugruppe (10) nach Anspruch 8, wobei der Dämpfungsmechanismus (22) einen Innenzylinder (26) enthält, der mit der Halterung (16) verbunden ist, und einen Außenzylinder (28) enthält, der mit dem Innenzylinder (26) reibschlüssig und drehbar in Eingriff gelangt, wobei der Außenzylinder (28) mit dem Traghaken (14) verbunden ist.

10. Griffbaugruppe (10) nach Anspruch 9, wobei einer der Zylinder (26, 28) Silikon umfasst.

11. Griffbaugruppe (10) nach Anspruch 9 oder Anspruch 10, wobei der Innenzylinder (26) eine erste Rippe (30) aufweist, die mit einem ersten Schlitz (32) in der Halterung (16) in Eingriff gelangt, und wobei der Außenzylinder (28) eine zweite Rippe (34) aufweist, die mit einem zweiten Schlitz (36) in dem Traghaken (14) in Eingriff gelangt.

12. Griffbaugruppe (10) nach einem der Ansprüche 8 bis 11, wobei der Dämpfungsmechanismus (22) auch die Schwenkbewegung des Griffs (12) in Bezug auf die Halterung (16) dämpft, wenn sich der Traghaken (14) in der eingeklappten Stellung befindet.

13. Griffbaugruppe (10) nach einem vorhergehenden Anspruch, die ferner eine Feder (21) umfasst, die zwischen dem Griff (12) und der Halterung (16) angebracht ist, um den Griff (12) nach oben zur Ruhestellung zu drängen.

## Revendications

1. Ensemble de poignée (10) aux fins d'utilisation dans un véhicule automobile, l'ensemble de poignée (10 comprenant :
- un support de montage (16), adapté pour être monté sur le véhicule et
- une poignée (12), reliée de manière pivotante au support de montage (16) par un pivot (20),
**caractérisé en ce que** l'ensemble comprend en outre :
- un crochet support (14), relié aussi de manière pivotante à la poignée (12) et au support de montage par le pivot (20) et dans lequel le crochet support (14) peut pivoter par rapport à la poignée (12), entre une position rentrée et une position d'utilisation, pour supporter des articles dans le véhicule.

2. Ensemble de poignée (10) selon la revendication 1, dans lequel la poignée comporte une branche et le crochet support est disposé dans la branche.

3. Ensemble de poignée (10) selon la revendication 1 ou 2, comprenant en outre un autre pivot (19), pour relier en outre de manière pivotante la poignée à l'ensemble de montage.

4. Ensemble de poignée (10) selon la revendication 3, dans lequel le support de montage comprend une pluralité de charnières (18), pour recevoir la poignée (12), la poignée (12) étant reliée de manière pivotante aux charnières (18) par les pivots (19, 20).

5. Ensemble de poignée (10) selon l'une quelconque des revendications précédentes, dans lequel le crochet support (14) comporte un prolongement (39), qui peut être mis en prise avec le support de montage (16), pour limiter le mouvement du crochet support (14).

6. Ensemble de poignée (10) selon l'une quelconque des revendications précédentes, comprenant en outre un ressort (38), relié entre la poignée (12) et le crochet support (14) pour pousser le crochet support (14) vers la position d'utilisation.

7. Ensemble de poignée (10) selon l'une quelconque des revendications précédentes, comprenant en outre un mécanisme de verrouillage (40), qui est associé de manière mobile à la poignée (12) et peut être mis en prise avec une fente (42) dans le crochet support (14), pour immobiliser le crochet support (14) dans la position rentrée.

8. Ensemble de poignée (10) selon l'une quelconque des revendications précédentes, comprenant en outre un mécanisme d'amortissement (22), relié entre le support de montage (16) et le crochet support (14), pour amortir le mouvement de pivotement du crochet support (14).

9. Ensemble de poignée (10) selon la revendication 8, dans lequel le mécanisme d'amortissement (22) comporte un cylindre intérieur (26), relié au support de montage (16) et un cylindre extérieur (28), qui vient en prise par friction et à rotation avec le cylindre intérieur (26), le cylindre extérieur (28) étant relié au crochet support (14).

10. Ensemble de poignée (10) selon la revendication 9, dans lequel l'un des cylindres (26, 28) comprend du silicone.

11. Ensemble de poignée (10) selon la revendication 9 ou la revendication 10, dans lequel le cylindre intérieur (26) possède une première nervure (30), qui vient en prise avec une première fente (32) du support de montage (16) et le cylindre extérieur (28) possède une deuxième nervure (34), qui vient en prise avec une deuxième fente (36) du crochet support (14).

12. Ensemble de poignée (10) selon l'une quelconque des revendications 8 à 11, dans lequel le mécanisme d'amortissement (22) amortit aussi le mouvement de pivotement de la poignée (12) par rapport au support de montage (16), quand le crochet support (14) est en position rentrée.

13. Ensemble de poignée (10) selon l'une quelconque des revendications précédentes, comprenant en outre un ressort (21), relié entre la poignée (12) et le support de montage (16), pour pousser la poignée (12) vers le haut, vers la position de repos.
